# EUROPEAN PATENT SPECIFICATION

(11) **EP 2 654 039 B1**
(45) Date of publication and mention of the grant of the patent: **01.04.2015**
(21) Application number: 12792712.7
(22) Date of filing: 04.06.2012
(51) Int. Cl.: G10L 19/005, G10L 19/008, H04M 3/56

(54) **AUDIO DECODING METHOD AND APPARATUS**
AUDIODEKODIERUNGSVERFAHREN UND -VORRICHTUNG
PROCÉDÉ ET DISPOSITIF DE DÉCODAGE AUDIO

(30) Priority: 02.06.2011 CN 201110147225
(43) Date of publication of application: 23.10.2013
(73) Proprietor: Huawei Device Co., Ltd., Shenzhen, Guangdong 518129 (CN)
(72) Inventor: ZHAO, Yunxuan, Shenzhen, Guangdong 518129 (CN); LIU, Zhihui, Shenzhen, Guangdong 518129 (CN)
(74) Representative: Pfenning, Meinig & Partner GbR
(86) International application number: PCT/CN2012/076435
(87) International publication number: WO 2012/163304

(56) References cited:
- WO-A1-03/107591
- CN-A- 1 445 941
- CN-A- 101 221 765
- US-A1- 2006 209 955
- US-A1- 2007 094 009
- US-A1- 2009 279 615
- US-A1- 2010 280 822
- US-B2- 7 805 297
- RISHI SINHA ET AL: "Loss Concealment for Multi-Channel Streaming Audio", NOSSDAV'03; [PROCEEDINGS OF THE INTERNATIONAL WORKSHOP ON NETWORK AND OPERATING SYSTEM SUPPORT FOR DIGITAL AUDIO AND VIDEO (NOSSDAV)], MONTEREY, CALIFORNIA, USA, 1 June 2003 (2003-06-01), pages 100-109, XP002513199, ISBN: 978-1-58113-694-4
- WEN-TSAI LIAO ET AL: "Adaptive recovery techniques for real-time audio streams", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 2, 22 April 2001 (2001-04-22), pages 815-823, XP010538767, DOI: 10.1109/INFCOM.2001.916272 ISBN: 978-0-7803-7016-6

## Description

### TECHNICAL FIELD

The present invention relates to the field of data processing, and in particular, to an audio decoding method and apparatus.

### BACKGROUND

A video conferencing technology implements long-distance transmission of information integrating voice, image, data, and the like, so that people can hear the voice of a remote party during remote communication by using the video conferencing technology and can also see motion pictures and slide content of the remote party, which greatly enhances intimacy and on-the-spot experience in remote communication.

A video conferencing system generally includes a video conferencing server (for example, a multipoint control unit (MCU, Multipoint Control Unit) and terminals. In a video conference, each terminal corresponds to a site, and the terminals collect the voices and images of the sites and encode and send the collected voices and images to the MCU. The MCU processes the voices and images in a certain mode (voice mixing, image forwarding, or multi-picture composition), and sends the processed voices and images to each terminal, and the terminal decodes and outputs the voices and images of a remote site, thereby achieving the objective of remote communication.

A conventional video conferencing system generally uses a user datagram protocol (UDP, User Datagram Protocol) to transmit audio and image data. Because UDP provides a simple and unreliable transaction-oriented information transfer service, packet loss is unavoidable in the process of transmitting audio and image data.

In the prior art, after an encoding terminal completes audio encoding, the encoding terminal sends an encoded data packet to a decoding terminal.

After receiving the data packet, the decoding terminal removes a real-time transport protocol (RTP, Real-time Transport Protocol) header of the data packet, performs deinterleaving according to a multi-channel stream format, and obtains audio data of each channel by decoding.

If a data packet is lost, the decoding terminal may determine the channel to which the lost audio data belongs, and for each channel, performs independent packet loss concealment processing on the lost audio data in the channel according to the decoded audio data in the channel, that is, intra-channel packet loss concealment processing, and obtains a finally output signal.

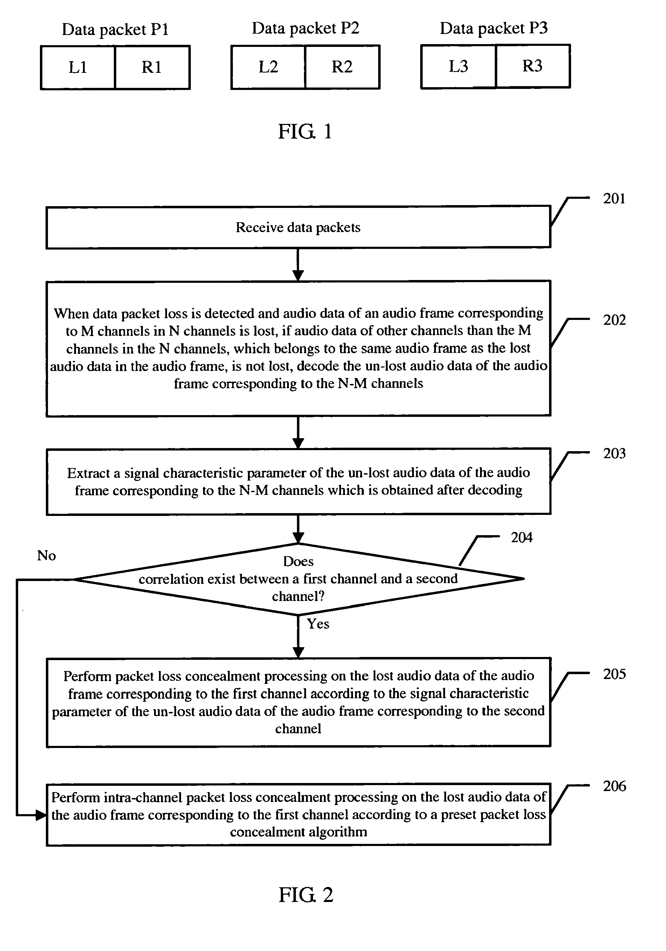

Specifically, as shown in FIG. 1, in the technical solution of the prior art, if data packet P2 is lost but data packet P1 and data packet P3 are not lost, the decoding terminal may determine that the channels to which the lost audio data belongs are the left channel (L) and right channel (R), and for the left channel, use audio data L1 in data packet P1 and/or audio data L3 in data packet P3 to perform packet loss concealment processing on audio data L2 in data packet P2, and use audio data R1 in data packet P1 and/or audio data R3 in data packet P3 to perform packet loss concealment processing on audio data R2 in data packet P2.

However, in the technical solution of the prior art, when performing packet loss concealment processing, the decoding terminal performs intra-channel packet loss concealment processing on audio data in the channel, and for a multi-channel system, this processing manner weakens the effect of packet loss concealment processing.

It is also known, according to the patent application US2010/0280822 A1, a technique for lost frame compensation of stereo audio signals. A compensation switching unit selects as compensation signals either inter-channel compensation signals or intra-channel compensation signals. Inter-channel correlation and intra-channel correlations are calculated by use of the monophonic decoded signals of a previous frame.

### SUMMARY

Embodiments of the present invention provide an audio decoding method and apparatus, which can improve the effect of packet loss concealment processing in a video decoding system having N channels (where N is greater than or equal to 2).

An audio decoding method provided by an embodiment of the present invention is applicable to an audio decoding system including N channels, where N is an integer greater than or equal to 2. The method includes: receiving data packets; when data packet loss is detected and audio data of an audio frame corresponding to M channels in N channels is lost, if audio data of other channels than the M channels in the N channels, which belongs to the same audio frame as the lost audio data in the audio frame, is not lost, decoding the un-lost audio data of the audio frame corresponding to the N-M channels, where M is an integer greater than 0 and smaller than N; extracting a signal characteristic parameter of the un-lost audio data of the audio frame corresponding to the N-M channels which is obtained after decoding; determining whether correlation exists between a first channel and a second channel, where the first channel is any one of the M channels with lost audio data of the audio frame, and the second channel is any one of the N-M channels without audio data loss in the audio frame; and if correlation exists between the first channel and the second channel, performing packet loss concealment processing on the lost audio data of the audio frame corresponding to the first channel according to the signal characteristic parameter of the un-lost audio data of the audio frame corresponding to the second channel; if correlation does not exist between the first channel and the second channel, performing intra-channel packet loss concealment processing on the lost audio data of the audio frame corresponding to the first channel according to a preset packet loss concealment algorithm.

An audio decoding apparatus provided by an embodiment of the present invention is configured to decode audio data of N channels, where N is an integer greater than or equal to 2. The apparatus includes:
a receiving unit, configured to receive data packets; a decoding unit, configured to: when data packet loss is detected and audio data of an audio frame corresponding to M channels in N channels is lost, if audio data of other channels than the M channels in the N channels, which belongs to the same audio frame as the lost audio data in the audio frame, is not lost, decode the un-lost audio data of the audio frame corresponding to the N-M channels, where M is an integer greater than 0 and smaller than N; an extracting unit, configured to extract a signal characteristic parameter of the un-lost audio data of the audio frame corresponding to the N-M channels which is obtained by the decoding unit after decoding; a correlation judging unit, configured to determine whether correlation exists between a first channel and a second channel, where the first channel is any one of the M channels with lost audio data of the audio frame, and the second channel is any one of the N-M channels without audio data loss in the audio frame, and if correlation exists between the first channel and the second channel, trigger a first packet loss concealing unit to perform a corresponding operation, if correlation does not exist between the first channel and the second channel, trigger a second packet loss concealing unit to perform a corresponding operation; the first packet loss concealing unit, configured to perform packet loss concealment processing on the lost audio data of the audio frame corresponding to the first channel according to the signal characteristic parameter of the un-lost audio data of the audio frame corresponding to the second channel which is extracted by the extracting unit; and the second packet loss concealing unit, configured to perform intra-channel packet loss concealment processing on the lost audio data of the audio frame corresponding to the first channel according to a preset packet loss concealment algorithm.

As can be seen from the above technical solutions, the embodiments of the present invention have the following advantages:
In the embodiments of the present invention, when data packet loss is detected and audio data of an audio frame corresponding to M channels (M is an integer greater than 0 and smaller than N) in N channels (N is an integer greater than or equal to 2) is lost, if audio data of other channels than the M channels in the N channels, which belongs to the same audio frame as the lost audio data in the audio frame, is not lost, a signal characteristic parameter of the un-lost audio data of the audio frame corresponding to the N-M channels may be obtained; and if correlation exists between the first channel and the second channel, packet loss concealment processing is performed on the lost audio data of the audio frame corresponding to the first channel according to the signal characteristic parameter of the un-lost audio data of the audio frame corresponding to the second channel. Because the un-lost audio data belongs to the same audio frame but belongs to different channels, correlation between different channels may be used when the audio decoding apparatus performs packet loss concealment processing, so as to improve the effect of packet loss concealment processing in a system having N channels.

### BRIEF DESCRIPTION OF DRAWINGS

FIG. 1 is a schematic structural diagram of a data packet in the prior art;
FIG. 2 is a schematic diagram of an embodiment of an audio decoding method according to the present invention;
FIG. 3 is a schematic diagram of division of audio data according to the present invention;
FIG. 4 is a schematic diagram of another embodiment of an audio decoding method according to the present invention;
FIG. 5 is a schematic diagram of packet loss in a process of transmitting audio data according to the present invention;
FIG. 6 is a schematic diagram of a data flowchart of audio decoding according to the present invention;
FIG. 7 is a schematic diagram of an embodiment of an audio decoding apparatus according to the present invention; and
FIG. 8 is a schematic diagram of another embodiment of an audio decoding apparatus according to the present invention.

### DESCRIPTION OF EMBODIMENTS

Embodiments of the present invention provide an audio decoding method and apparatus, which can improve the effect of packet loss concealment processing in an audio decoding system having N channels (N is an integer greater than or equal to 2).

As shown in FIG. 2, an embodiment of an audio decoding method according to the present invention includes the following:

### 201. Receive data packets.

In this embodiment, an audio decoding apparatus may be configured to decode audio data of N channels, where N is an integer greater than or equal to 2.

After an audio encoding apparatus completes encoding, data packets are sent to the audio decoding apparatus through a network.

The sending process may be as follows: The audio encoding apparatus directly sends the data packets to the audio decoding apparatus, or the audio encoding apparatus sends the data packets to a forwarding device, and then the forwarding device sends the data packets to the audio decoding apparatus.

For ease of understanding, the following briefly describes some parameters used in an audio encoding/decoding process.

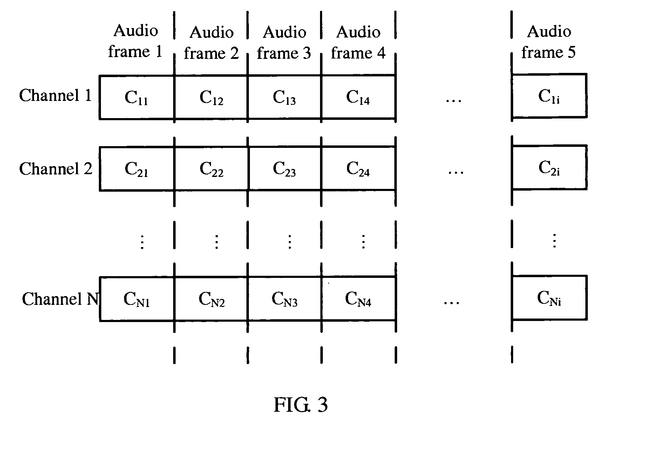

Referring to FIG. 3, FIG. 3 shows audio data streams of N channels. Audio data of N channels in a same unit duration (for example, Cli, C2i, ..., CNi) may be regarded as an audio frame, for example, audio frame 1, audio frame 2, ..., audio frame i shown in FIG. 3, where i is a sequence number of an audio frame and its value depends on a duration of audio data.

For ease of subsequent description, audio data of a unit length may be referred to as a segment of audio data, and the unit length may be determined according to an actual application environment. The unit length also indicates the length of an audio frame, for example, 5 ms or 10 ms. Each audio frame may be regarded as a set formed by audio data of the same unit duration but of different channels.

It should be noted that the audio data of the N channels is divided into different audio frames according to a time sequence. Each audio frame has a fixed length, and includes N segments of audio data. Each segment of audio data corresponds to a channel, where N is the number of channels and is an integer greater than or equal to 2.

For example, for a system having three channels, each audio frame includes three segments of audio data, and the three segments of audio data correspond to a left channel, a middle channel, and a right channel, respectively.

202. When data packet loss is detected and audio data of an audio frame corresponding to M channels in N channels is lost, if audio data of other channels than the M channels in the N channels, which belongs to the same audio frame as the lost audio data in the audio frame, is not lost, decode the un-lost audio data of the audio frame corresponding to the N-M channels. Because UDP provides a simple and unreliable transaction-oriented information transfer service, packet loss is unavoidable in the process of transmitting audio and image data. When data packet loss is detected, the audio decoding apparatus may determine audio data loss of each channel.

If audio data of an audio frame corresponding to M channels is lost, and audio data of other channels than the M channels in the N channels, which belongs to the same audio frame as the lost audio data in the audio frame, is not lost, it indicates that the audio data belonging to the same audio frame is not completely lost. In this case, the audio decoding apparatus may decode the un-lost audio data of the audio frame corresponding to the N-M channels.

In this embodiment, M is an integer greater than 0 and smaller than N. 203. Extract a signal characteristic parameter of the un-lost audio data of the audio frame corresponding to the N-M channels which is obtained after decoding.

The audio decoding apparatus may obtain the signal characteristic parameter of the audio data after decoding the un-lost audio data of the audio frame corresponding to the N-M channels.

In this embodiment, the specific signal characteristic parameter may be a signal pitch period and/or signal energy. It is understandable that in an actual application, the signal characteristic parameter may be indicated by other parameters in addition to the above two parameters, for example, a signal pitch, which is not specifically limited herein.

In this embodiment, the manner of extracting, by the audio decoding apparatus, the signal characteristic parameter of the un-lost audio data of the audio frame corresponding to the N-M channels which is obtained after decoding is based on the prior art and is not further described herein.

204. Determine whether correlation exists between a first channel and a second channel, and if correlation exists between the first channel and the second channel, execute step 205; if correlation does not exist between the first channel and the second channel, execute step 206.

In this embodiment, the first channel is any one of the M channels with lost audio data of the audio frame, and the second channel is any one of the N-M channels without audio data loss in the audio frame.

It should be noted that correlation exists between the channels when the audio data transmitted by different channels aims at the same sound source, and correlation does not exist between the channels when the audio data transmitted by different channels aims at different sound sources.

205. Perform packet loss concealment processing on the lost audio data of the audio frame corresponding to the first channel according to the signal characteristic parameter of the un-lost audio data of the audio frame corresponding to the second channel.

If correlation exists between the first channel and the second channel, it indicates that the audio data transmitted by the first channel and the audio data transmitted by the second channel aim at the same sound source. Therefore, strong correlation exists between the lost audio data of the first channel and the un-lost audio data of the second channel.

In this embodiment, the audio decoding apparatus may refer to the signal characteristic parameter of the un-lost audio data of the audio frame corresponding to the second channel when performing packet loss concealment processing on the lost audio data of the audio frame corresponding to the first channel, that is, use the signal characteristic parameter of the un-lost audio data of the audio frame corresponding to the second channel to perform packet loss concealment processing on the lost audio data of the audio frame corresponding to the first channel.

It should be noted that if correlation also exists between the channel corresponding to other un-lost audio data and the first channel in addition to correlation between the second channel and the first channel, the audio decoding apparatus may also perform packet loss concealment processing on the lost audio data of the first channel according to the signal characteristic parameter of the un-lost audio data of the audio frame corresponding to the second channel and the signal characteristic parameter of the un-lost audio data of the audio frame corresponding to at least one correlated channel.

The correlated channel is a channel having correlation with the first channel, other than the second channel in the N-M channels corresponding to the un-lost audio data.

206. Perform intra-channel packet loss concealment processing on the lost audio data of the audio frame corresponding to the first channel according to a preset packet loss concealment algorithm.

If correlation does not exist between the first channel and the second channel, it indicates that the audio data transmitted by the first channel and the audio data transmitted by the second channel do not aim at the same sound source. Therefore, correlation basically does not exist between the lost audio data of the first channel and the un-lost audio data of the second channel.

In this embodiment, the audio decoding apparatus may use a preset packet loss concealment algorithm to perform intra-channel packet loss concealment processing on the lost audio data of the audio frame corresponding to the first channel. The specific process is similar to the conventional packet loss concealment process and is not further described herein.

In the embodiment of the present invention, when data packet loss is detected and audio data of an audio frame corresponding to M channels (M is an integer greater than 0 and smaller than N) in N channels (N is an integer greater than or equal to 2) is lost, if audio data of other channels than the M channels in the N channels, which belongs to the same audio frame as the lost audio data in the audio frame, is not lost, a signal characteristic parameter of the un-lost audio data of the audio frame corresponding to the N-M channels may be obtained; and if correlation exists between the first channel and the second channel, packet loss concealment processing is performed on the lost audio data of the audio frame corresponding to the first channel according to the signal characteristic parameter of the un-lost audio data of the audio frame corresponding to the second channel. Because the un-lost audio data belongs to the same audio frame but belongs to different channels, correlation between different channels may be used when the audio decoding apparatus performs packet loss concealment processing, so as to improve the effect of packet loss concealment processing in a system having N channels.

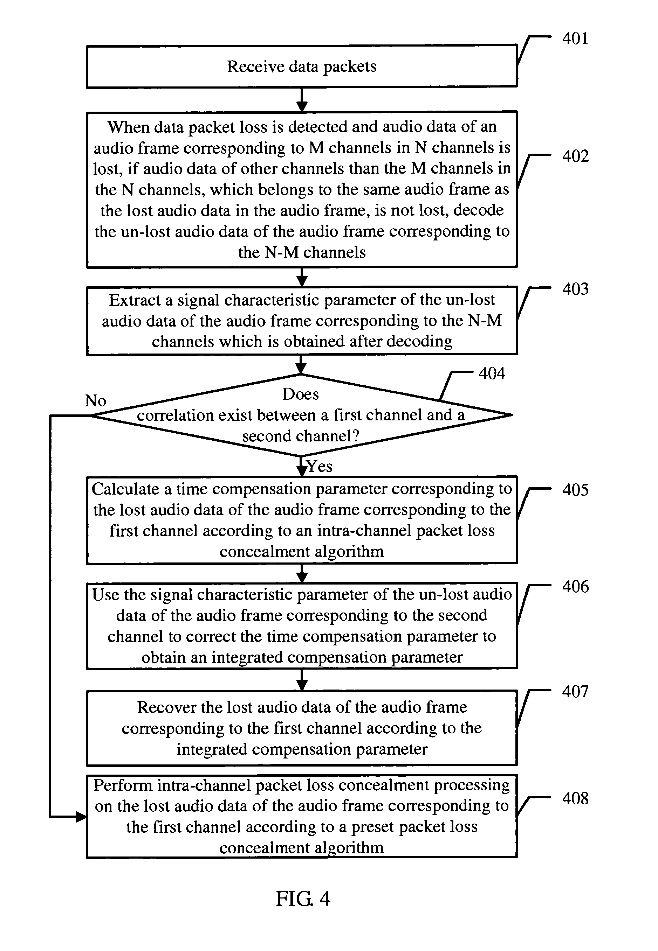

For ease of understanding, the following describes an audio decoding method according to the present invention by using a specific instance. Referring to FIG. 4, another embodiment of an audio decoding method according to the present invention includes:

### 401. Receive data packets.

Step 401 in this embodiment is similar to the content of step 201 in the embodiment shown in FIG. 2, and is not further described herein.

402. When data packet loss is detected and audio data of an audio frame corresponding to M channels in N channels is lost, if audio data of other channels which belongs to the same audio frame as the lost audio data in the audio frame is not lost, decode the un-lost audio data of the audio frame corresponding to the N-M channels.

Because UDP provides a simple and unreliable transaction-oriented information transfer service, packet loss is unavoidable in the process of transmitting audio and image data. When data packet loss is detected, an audio decoding apparatus may determine audio data loss of each channel.

Each data packet has a corresponding identifier, for example, a first data packet sent by an audio encoding apparatus is data packet 1, whose identifier is 000, a second data packet is data packet 2, whose identifier is 001, a third data packet is data packet 3, whose identifier is 010, and so on.

The audio decoding apparatus may determine, according to the identifiers of the received data packets, whether packet loss occurs. For example, the audio encoding apparatus performs sequential encoding on the data packets, starting from 000, then 001, 010, 011, and so on. Assuming that the identifier of the first data packet received by the audio decoding apparatus is 000 and the identifier of the second data packet is 010, considering that routes of different data packets are different, after waiting for a period, if the data packet whose identifier is 001 cannot be received, the audio decoding apparatus may determine, through detection, that packet loss occurs, and the lost data packet is data packet 2.

It is understandable that in an actual application, the audio decoding apparatus may use other manner in addition to the above manner to determine whether packet loss occurs and determine the specific lost data packet, and the specific manner is not limited herein.

Audio data in a unit length of the same unit duration but of different channels forms one audio frame. Therefore, after detecting and determining packet loss, the audio decoding apparatus may first query the channels on which packet loss occurs. If all channels have lost audio data in the same audio frame, it indicates that an audio frame is completely lost. In this case, the audio decoding apparatus may perform intra-channel packet loss concealment processing on lost audio data of each channel according to a preset packet loss concealment algorithm. The specific packet loss concealment process is similar to the conventional packet loss concealment process, and is not further described herein.

If the audio decoding apparatus learns that not all N channels have lost audio data in an audio frame but only the audio data of M channels is lost, and audio data of other channels than the M channels in the N channels, which belongs to the same audio frame as the lost audio data in the audio frame, is not lost, the audio decoding apparatus may decode the un-lost audio data of the audio frame.

In this embodiment, M is an integer greater than 0 and smaller than N.

403. Extract a signal characteristic parameter of the un-lost audio data of the audio frame corresponding to the N-M channels which is obtained after decoding.

The audio decoding apparatus may obtain the signal characteristic parameter of the audio data through extraction after decoding the un-lost audio data of the audio frame corresponding to the N-M channels.

In this embodiment, the specific signal characteristic parameter may be a signal pitch period and/or signal energy. It is understandable that in the actual application, the signal characteristic parameter may be indicated by other parameters in addition to the above two parameters, for example, a signal pitch, which is not specifically limited herein.

404. Determine whether correlation exists between a first channel and a second channel, and if correlation exists between the first channel and the second channel, execute step 405; if correlation does not exist between the first channel and the second channel, execute step 408. The first channel is any one of the M channels with lost audio data of the audio frame, and the second channel is any one of the N-M channels without audio data loss in the audio frame.

In this embodiment, to determine whether correlation exists between channels, the audio decoding apparatus may use historical audio data of each channel to perform analysis, and the specific analysis manner may include:

### (1) Performing analysis by using audio data:

The audio decoding apparatus may use a correlation function to calculate a correlation value between audio data received on the first channel and audio data which is received on the second channel and belongs to the same audio frame as the audio data received on the first channel.

The audio decoding apparatus determines, according to the correlation value, whether correlation exists between the first channel and the second channel. Specifically, if the correlation value approaches 1, it indicates that correlation exists between the first channel and the second channel; if the correlation value approaches 0, it indicates that correlation does not exist between the first channel and the second channel.

### (2) Performing analysis by using the signal characteristic parameter of audio data:

The audio decoding apparatus may obtain a signal characteristic parameter of audio data received on the first channel and a signal characteristic parameter of audio data which is received on the second channel and belongs to the same audio frame as the audio data received on the first channel.

After obtaining the signal characteristic parameter of audio data, the audio decoding apparatus may determine correlation between the first channel and the second channel according to the signal characteristic parameter. Specifically:
The audio decoding apparatus may determine whether the signal characteristic parameter of the audio data received on the first channel and the signal characteristic parameter of the audio data which is received on the second channel and belongs to the same audio frame as the audio data received on the first channel satisfy a preset correlation condition, and if so, determine that correlation exists between the first channel and the second channel; if not, determine that correlation does not exist between the first channel and the second channel.

In this embodiment, the preset correlation condition may mean that a difference between the signal characteristic parameter of the audio data received on the first channel and the signal characteristic parameter of the audio data which is received on the second channel and belongs to the same audio frame as the audio data received on the first channel is smaller than a preset value; and if the difference is smaller than the preset value, it is determined that the signal characteristic parameter of the audio data received on the first channel and the signal characteristic parameter of the audio data which is received on the second channel and belongs to the same audio frame as the audio data received on the first channel satisfy the preset correlation condition, or vice versa.

Only several manners for the audio decoding apparatus in this embodiment to determine correlation between the first channel and the second channel are described above. It is understandable that in the actual application, the audio decoding apparatus may further use other manners to determine correlation between the first channel and the second channel. For example, the audio encoding apparatus notifies the audio decoding apparatus of correlation between channels before sending data packets or when sending data packets, or correlation between channels may be directly preset in the audio decoding apparatus. The specific manners are not further described herein.

In this embodiment, the audio decoding apparatus may determine correlation between channels by using the above manners. For example, assuming that there are four channels, which are channel 1, channel 2, channel 3, and channel 4, respectively, the correlation between channels which is determined by the audio decoding apparatus may be:
"correlation exists between channel 1, channel 2, and channel 3, correlation does not exist between channel 1 and channel 4, correlation does not exist between channel 2 and channel 4, and correlation does not exist between channel 3 and channel 4";
or, "correlation exists between channel 1 and channel 3, correlation exists between channel 2 and channel 4, correlation does not exist between channel 1 and channel 2, correlation does not exist between channel 1 and channel 4, correlation does not exist between channel 3 and channel 2, and correlation does not exist between channel 3 and channel 4".

It should be noted that step 404 in this embodiment is a process for the audio decoding apparatus to determine correlation between the first channel and the second channel, where the process is not necessarily executed after step 403, and the process may be a periodically executed process, for example, executed once at an interval of 10 seconds or 20 seconds or at other intervals, so that correlation between channels can be updated in real time. 405. Calculate a time compensation parameter corresponding to the lost audio data of the audio frame corresponding to the first channel according to an intra-channel packet loss concealment algorithm.

If the audio decoding apparatus determines that correlation exists between the first channel and the second channel, the audio decoding apparatus may first calculate the time compensation parameter corresponding to the lost audio data of the audio frame corresponding to the first channel according to the intra-channel packet loss concealment algorithm. Specifically:
Channel 3 is a channel corresponding to the lost audio data of the audio frame (namely, a first channel). The audio decoding apparatus may obtain, from channel 3, the signal characteristic parameter of the audio data which is successfully received latest before the current audio frame, and perform a time weighting operation according to the signal characteristic parameter to obtain the time compensation parameter. The specific weighting operation manner may be: $Time compensation parameter = \left(a*length/\left(delta*length\right)\right) * fcl ;$
   where, a is a time weighting coefficient, length is the length of an audio frame, delta is a difference between a sequence number of the audio frame of un-lost audio data used and a sequence number of the audio frame of lost audio data, and fc1 is a signal characteristic parameter of un-lost audio data in the channel.

For example, the audio decoding apparatus determines that the current audio frame of channel 3 is audio frame 3, and the audio decoding apparatus receives the audio data of channel 3 from audio frame 1, where the signal pitch period of the audio data is 100 Hz, and a length of each audio frame is 30 milliseconds. Therefore, the time compensation parameter may be calculated as: $\left(a*30/\left(30+30+30\right)\right) * 100 ;$
where, a is a time weighting coefficient, where the time weighting coefficient a is related to parameters such as a signal pitch period and an audio frame length.

The time compensation parameter indicates compensation in the signal pitch period for the lost audio data in the channel.

It should be noted that this embodiment only uses an example to describe the process of calculating a time compensation parameter corresponding to the lost audio data according to an intra-channel packet loss concealment algorithm. It is understandable that in the actual application, more manners may be used to calculate the time compensation parameter, which is a common sense for those skilled in the art and is not limited herein.

406. Use the signal characteristic parameter of the un-lost audio data of the audio frame corresponding to the second channel to correct the time compensation parameter to obtain an integrated compensation parameter.

After the time compensation parameter is obtained by calculation, the audio decoding apparatus may use the signal characteristic parameter of the un-lost audio data of the audio frame corresponding to the second channel to correct the time compensation parameter to obtain an integrated compensation parameter. Assuming that the channel without audio data loss in audio frame 3 is channel 1 (namely, a second channel), it is learned from step 404 that correlation exists between channel 1 and channel 3, that is, correlation exists between the first channel and the second channel. Therefore, the specific process of obtaining the integrated compensation parameter after correction may be: $Integrated compensation parameter = signal characteristic parameter of the un - lost audio data * space weighting coefficient b * time compensation parameter .$

The space weighting coefficient b is related to the correlation degree between channels. It should be noted that in the actual application, the audio decoding apparatus may further use the signal characteristic parameter of the un-lost audio data of audio frame 3 corresponding to channel 1 in other manners to correct the time compensation parameter, which is not limited herein.

In this embodiment, in step 406, the signal characteristic parameter of the un-lost audio data of audio frame 3 corresponding to channel 1 may be used to correct the time compensation parameter. It is understandable that the audio decoding apparatus may also directly perform intra-channel and inter-channel weighting operations to obtain the integrated compensation parameter. For example, assuming that the signal pitch period of the un-lost audio data is 150 Hz, the integrated compensation parameter may be: $Integrated compensation parameter = x * time compensation parameter + y * \left(b*fc⁢2\right)$
where, x is a time compensation weight, y is a space compensation weight, b is a space weighting coefficient, and fc2 is a signal characteristic parameter of the un-lost audio data between channels.

In combination with the foregoing example, the integrated compensation parameter in this embodiment may be: $x * \left(\left(a*30/\left(30+30+30\right)\right)*100\right) + y * \left(b*150\right) .$

Assuming that x = 0.3, y = 0.7, a = 0.5, and b = 0.1, the integrated compensation parameter is 5 + 10.5 = 15.5.

It should be noted that the content described above is a process of using the signal characteristic parameter of the un-lost audio data of the audio frame corresponding to the second channel to correct the time compensation parameter to obtain an integrated compensation parameter. In the actual application, in addition to correlation between the second channel and the first channel, correlation exists between the channel corresponding to other un-lost audio data and the first channel. Therefore, the time compensation parameter may be corrected according to the signal characteristic parameters of un-lost audio data of the audio frame corresponding to multiple channels having correlation with the first channel to obtain the integrated compensation parameter. The specific process may be:
using the signal characteristic parameter of the un-lost audio data of the audio frame corresponding to the second channel and the signal characteristic parameter of the un-lost audio data of the audio frame corresponding to at least one correlated channel to correct the time compensation parameter to obtain an integrated compensation parameter.

The correlated channel is a channel having correlation with the first channel, other than the second channel in the N-M channels corresponding to the un-lost audio data.

The specific process of obtaining the integrated compensation parameter after correction may be: 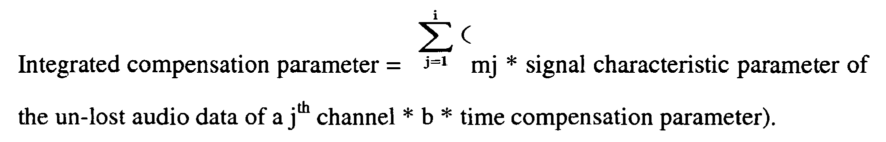
where, i is the number of channels having correlation with the first channel and participating in correction of the integrated compensation parameter, j indicates the j^{th} channel in the i channels, mj is a correlation weighting coefficient of the j^{th} channel, and b is a space weighting coefficient;
i is an integer greater than or equal to 1 and smaller than or equal to N-M, j is an integer greater than or equal to 1 and smaller than or equal to i, and mj and the space weighting coefficient b are related to the correlation degree between channels.

Assuming that the channels without audio data loss in audio frame 3 are channel 1 and channel 2, it is learned from step 404 that correlation exists between any two of channel 1, channel 2, and channel 3. Therefore, the integrated compensation parameter may be:
m1 * fc01 * b * time compensation parameter + m2 * fc02 * b * time compensation parameter.
m1 is a correlation weighting coefficient of channel 1, fc01 is a signal characteristic parameter of un-lost audio data of audio frame 3 corresponding to channel 1, m2 is a correlation weighting coefficient of channel 2, and fc02 is a signal characteristic parameter of un-lost audio data of audio frame 3 corresponding to channel 2.

The specific values of m1 and m2 are related to the correlation degree between channels. For example, the distance between the audio collecting device corresponding to channel 1 and the audio collecting device corresponding to channel 3 is smaller than the distance between the audio collecting device corresponding to channel 2 and the audio collecting device corresponding to channel 3. In this case, the correlation between channel 1 and channel 3 is stronger, and m1 may be set to be greater than m2, or vice versa.

It is understandable that in the actual application, there are more manners and rules for setting the correlation weighting coefficient, which are not specifically limited herein.

This embodiment only uses the signal characteristic parameters of un-lost audio data of two channels as an example for description. It is understandable that the signal characteristic parameters of un-lost audio data of more correlated channels having correlation with the first channel may be used for corresponding processing. The specific manner is similar and is not further described herein.

In this embodiment, in step 406, the signal characteristic parameters of the un-lost audio data of audio frame 3 corresponding to channel 1 and channel 2 may be used to correct the time compensation parameter. It is understandable that the audio decoding apparatus may also directly perform intra-channel and inter-channel weighting operations to obtain the integrated compensation parameter. For example, assuming that the signal pitch period of the un-lost audio data of channel 1 is 150 Hz, and the signal pitch period of the un-lost audio data of channel 2 is 170 Hz, the integrated compensation parameter may be: $\begin{matrix}integrated compensation parameter = x * time compensation parameter + y * \\ \left({\sum }_{j = 1}^{i} mj * signal characteristic parameter of the un - lost audio data of the {j}^{th} channel * b\right)\end{matrix}$
where, x is a time compensation weight, y is a space compensation weight, and b is a space weighting coefficient.

In combination with the foregoing example, the integrated compensation parameter in this embodiment may be: $x * \left(\left(a*30/\left(30+30+30\right)\right)*100\right) + y * \left(m⁢1*b*150+m⁢2*b*170\right) .$

Assuming that x = 0.3, y = 0.7, a = 0.5, b = 0.1, m1 = 0.6, and m2 = 0.4, the integrated compensation parameter is 5 + 11.06 = 16.06.

407. Recover the lost audio data of the audio frame corresponding to the first channel according to the integrated compensation parameter.

After obtaining the integrated compensation parameter by calculation, the audio decoding apparatus may recover the lost audio data of audio frame 3 corresponding to channel 3 according to the integrated compensation parameter.

Specifically, the signal characteristic parameter of the lost audio data of audio frame 3 corresponding to channel 3 may be set to: integrated compensation parameter + (signal characteristic parameter of un-lost audio data in the channel + signal characteristic parameter of un-lost audio data between channels)/2.

If the integrated compensation parameter is 15.5, the signal pitch period of the audio data recently received on channel 3 is 100 Hz, and the signal pitch period of un-lost audio data on channel 1 is 150 Hz, the audio decoding apparatus may determine that the signal pitch period of lost audio data of audio frame 3 corresponding to channel 3 is 15.5 + ((100 + 150)/2) = 140.5 Hz.

After the signal pitch period of the lost audio data of audio frame 3 corresponding to channel 3 is obtained by calculation, the un-lost audio data of audio frame 3 corresponding to channel 1 may be replicated to audio frame 3 of channel 3, and the signal pitch period of the replicated audio data is changed to 140.5 Hz, and the remaining parameters remain unchanged. Therefore, the lost audio data of audio frame 3 corresponding to channel 3 may be recovered. It should be noted that when the signal characteristic parameters of un-lost audio data of multiple correlated channels having correlation with the first channel are used to recover the lost audio data of the audio frame corresponding to the first channel, the specific processing manner is similar and is not further described herein.

It should be noted that this embodiment only uses several examples to describe the process of recovering the lost audio data according to the integrated compensation parameter. It is understandable that in the actual application, there may be more manners for recovering the lost audio data according to the integrated compensation parameter, which are not specifically limited herein.

408. Perform intra-channel packet loss concealment processing on the lost audio data of the audio frame corresponding to the first channel according to a preset packet loss concealment algorithm.

If correlation does not exist between channel 3 and a channel corresponding to any piece of un-lost audio data, it indicates that the audio data transmitted by channel 3 and the audio data transmitted by the channels corresponding to all un-lost audio data aim at different sound sources, and therefore, correlation does not exist basically between channel 3 and the channels corresponding to all un-lost audio data.

In this embodiment, the audio decoding apparatus may use a preset packet loss concealment algorithm to perform intra-channel packet loss concealment processing on the lost audio data of audio frame 3 corresponding to channel 3. The specific process is similar to the conventional packet loss concealment process and is not further described herein.

In the embodiment of the present invention, when data packet loss is detected and audio data of an audio frame corresponding to M channels (M is an integer greater than 0 and smaller than N) in N channels (N is an integer greater than or equal to 2) is lost, if audio data of other channels than the M channels in the N channels, which belongs to the same audio frame as the lost audio data in the audio frame, is not lost, a signal characteristic parameter of the un-lost audio data of the audio frame corresponding to the N-M channels may be obtained; and if correlation exists between the first channel and the second channel, packet loss concealment processing is performed on the lost audio data of the audio frame corresponding to the first channel according to the signal characteristic parameter of the un-lost audio data of the audio frame corresponding to the second channel. Because the un-lost audio data belongs to the same audio frame but belongs to different channels, correlation between different channels may be used when the audio decoding apparatus performs packet loss concealment processing, so as to improve the effect of packet loss concealment processing in a system having N channels.

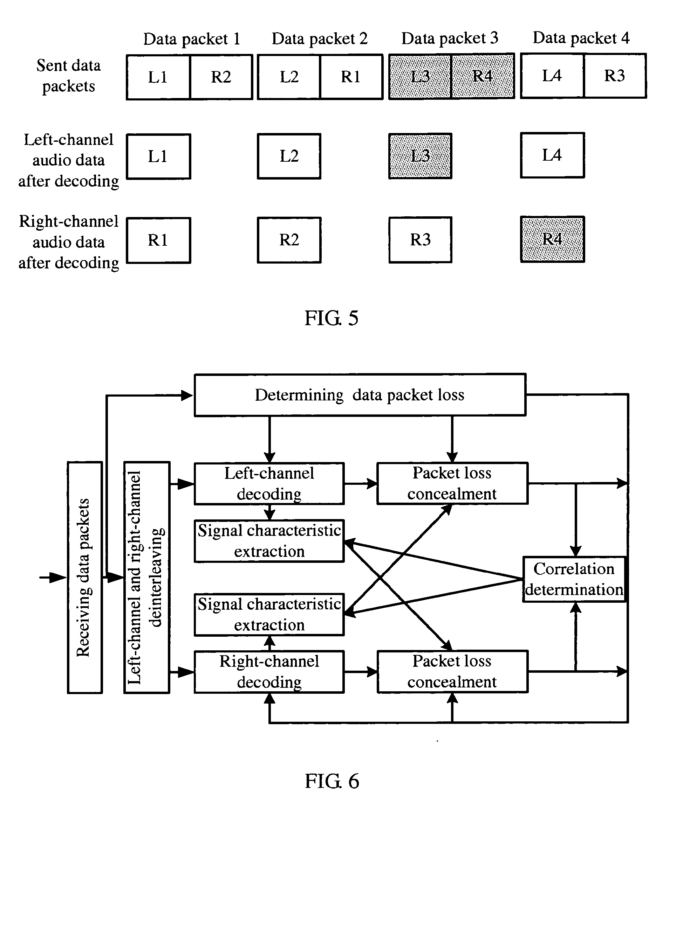

For ease of understanding, the following uses some examples in the actual application to describe the embodiment of the present invention in detail:
As shown in FIG. 5, this embodiment is applicable to a system having two channels, where audio data of a left channel is Li and audio data of a right channel is Ri.
An audio encoding apparatus may compose a data packet by using audio data Li of a left channel in an i^{th} audio frame and audio data Ri+1 of a right channel in an (i+1)^{th} audio frame; and
   compose another data packet by using audio data Li+1 of a left channel in the (i+1)^{th} audio frame and audio data Ri of a right channel in the i^{th} audio frame.

In this embodiment, four audio frames are used as an example for description. It is understandable that in the actual application, there may be more audio frames, which are not specifically limited herein.

The audio encoding apparatus packetizes left-channel audio data L1 of a first audio frame and right-channel audio data R2 of a second audio frame into data packet 1, and packetizes left-channel audio data L2 of the second audio frame and right-channel audio data R1 of the first audio frame into data packet 2. Similarly, the audio encoding apparatus packetizes L3 and R4 into data packet 3, and packetizes L4 and R3 into data packet 4.

The audio encoding apparatus may allocate a unique identifier to each data packet, for example, allocate 00 to data packet 1, allocate 01 to data packet 2, allocated 10 to data packet 3, and allocate 11 to data packet 4.

After completing packetization, the audio encoding apparatus may send the data packets to an audio decoding apparatus. Assuming that data packet 3 is lost in the sending process, the audio data obtained by the audio decoding apparatus by decoding is also shown in FIG. 5, where L3 and R4 are lost.

The specific decoding process of the audio decoding apparatus is shown in FIG. 6. As shown in FIG. 6, the identifier of the first data packet received by the audio decoding apparatus is 00. The audio decoding apparatus performs left-channel and right-channel deinterleaving on the received data packet, and decodes the left channel and right channel, where the audio data obtained after performing left-channel decoding on the first data packet is L1, and the audio data obtained after right-channel decoding is R2. The audio decoding apparatus may buffer L1 and R2.

The identifier of the second data packet received by the audio decoding apparatus is 01.

The audio decoding apparatus performs left-channel and right-channel deinterleaving on the received data packet, and decodes the left channel and right channel, where the audio data obtained after performing left-channel decoding on the second data packet is L2, and the audio data obtained after right-channel decoding is R1. The audio decoding apparatus may obtain audio data of two audio frames in combination with the buffered L1 and R2, where the two audio frames are audio frame 1 (corresponding to L1 and R1) and audio frame 2 (corresponding to L2 and R2), respectively.

Because both L1 and R1 are successfully received, it is unnecessary to perform packet loss concealment processing, and L1 and R1 are directly output. Because neither of L1 and R1 is lost, the audio decoding apparatus may determine correlation between the left channel and the right channel according to the signal characteristic parameter of L1 and the signal characteristic parameter of R1. The specific determining process is similar to the process described in the foregoing method embodiment, and is not further described herein.

In addition, because both L2 and R2 are successfully received, it is unnecessary to perform packet loss concealment processing, and L2 and R2 are directly output. Because neither of L2 and R2 is lost, the audio decoding apparatus may determine correlation between the left channel and the right channel again according to the signal characteristic parameter of L2 and the signal characteristic parameter of R2. The specific determining process is similar to the process described in the foregoing method embodiment, and is not further described herein.

The identifier of the third data packet received by the audio decoding apparatus is 11.

The audio decoding apparatus performs left-channel and right-channel deinterleaving on the received data packet, and decodes the left channel and right channel, where the audio data obtained after performing left-channel decoding on the third data packet is L4, and the audio data obtained after right-channel decoding is R3. The audio decoding apparatus may buffer L4 and R3.

The audio decoding apparatus may learn, according to the identifier of the data packet, that the data packet whose identifier is 10 is lost. As can known from the audio data obtained after decoding, audio data L3 and R4 are lost.

The audio decoding apparatus may obtain audio data R3 of the right channel, which belongs to the same audio frame as L3, obtain the signal characteristic parameter of R3, and then determine whether correlation exists between the left channel and the right channel.

If correlation exists, packet loss concealment processing is performed on L3 by using the signal characteristic parameter of R3 and in combination with signal characteristic parameters of L2 and L4. The specific process is similar to the process described in the foregoing method embodiment and is not further described herein.

If correlation does not exist, signal characteristic parameters of L2 and L4 are used to perform packet loss concealment processing on L3. The specific process is similar to the process described in the foregoing method embodiment and is not further described herein.

Likewise, the audio decoding apparatus may also perform packet loss concealment processing on R4 in a similar manner, and the specific process is not further described herein.

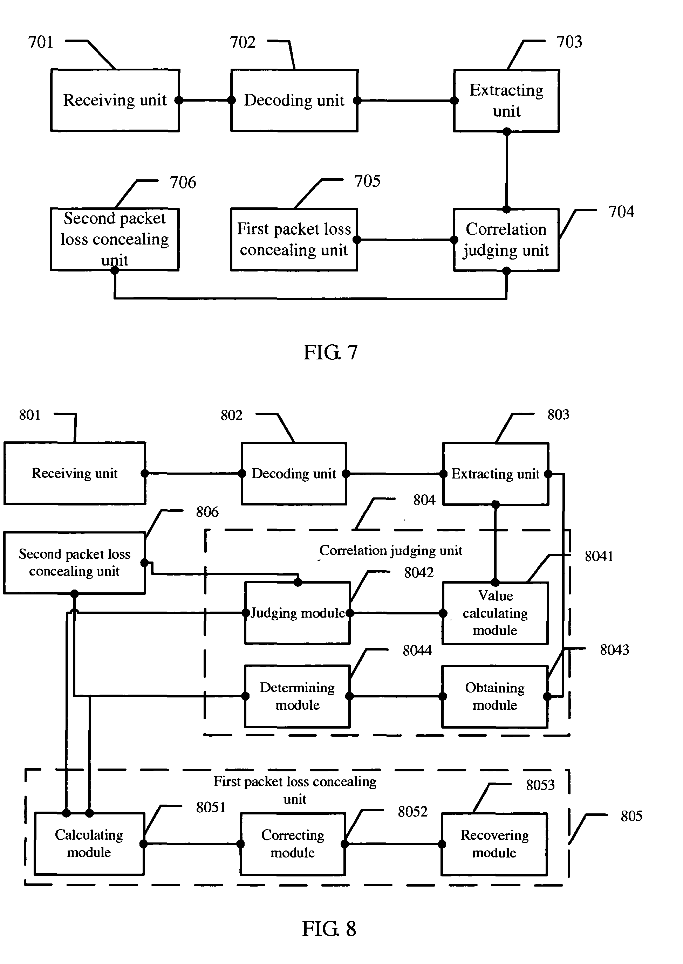

The above describes the embodiment of the audio decoding method according to the present invention. The following describes an embodiment of an audio decoding apparatus. As shown in FIG. 7, an embodiment of an audio decoding apparatus according to the present invention includes:
a receiving unit 701, configured to receive data packets;
a decoding unit 702, configured to: when data packet loss is detected and audio data of an audio frame corresponding to M channels in N channels is lost, if audio data of other channels than the M channels in the N channels, which belongs to the same audio frame as the lost audio data in the audio frame, is not lost, decode the un-lost audio data of the audio frame corresponding to the N-M channels, where M is an integer greater than 0 and smaller than N;
an extracting unit 703, configured to extract a signal characteristic parameter of the un-lost audio data of the audio frame corresponding to the N-M channels which is obtained by the decoding unit 702 after decoding;
a correlation judging unit 704, configured to determine whether correlation exists between a first channel and a second channel, where the first channel is any one of the M channels with lost audio data of the audio frame, and the second channel is any one of the N-M channels without audio data loss in the audio frame, and if correlation exists between the first channel and the second channel, trigger a first packet loss concealing unit 705 to perform a corresponding operation; if correlation does not exist between the first channel and the second channel, trigger a second packet loss concealing unit 706 to perform a corresponding operation;
the first packet loss concealing unit 705, configured to perform packet loss concealment processing on the lost audio data of the audio frame corresponding to the first channel according to the signal characteristic parameter, extracted by the extracting unit 703, of the un-lost audio data of the audio frame corresponding to the second channel; and
the second packet loss concealing unit 706, configured to perform intra-channel packet loss concealment processing on the lost audio data of the audio frame corresponding to the first channel according to a preset packet loss concealment algorithm.

The following describes an audio decoding apparatus according to the present invention by using a specific instance. As shown in FIG. 8, another embodiment of the audio decoding apparatus according to the present invention includes:
a receiving unit 801, configured to receive data packets;
a decoding unit 802, configured to: when data packet loss is detected and audio data of an audio frame corresponding to M channels in N channels is lost, if audio data of other channels than the M channels in the N channels, which belongs to the same audio frame as the lost audio data in the audio frame, is not lost, decode the un-lost audio data of the audio frame corresponding to the N-M channels, where M is an integer greater than 0 and smaller than N;
an extracting unit 803, configured to extract a signal characteristic parameter of the un-lost audio data of the audio frame corresponding to the N-M channels which is obtained by the decoding unit 802 after decoding;
a correlation judging unit 804, configured to determine whether correlation exists between a first channel and a second channel, where the first channel is any one of the M channels with lost audio data of the audio frame, and the second channel is any one of the N-M channels without audio data loss in the audio frame, and if correlation exists between the first channel and the second channel, trigger a first packet loss concealing unit 805 to perform a corresponding operation; if correlation does not exist between the first channel and the second channel, trigger a second packet loss concealing unit 806 to perform a corresponding operation;
the first packet loss concealing unit 805, configured to perform packet loss concealment processing on the lost audio data of the audio frame corresponding to the first channel according to the signal characteristic parameter, extracted by the extracting unit 803, of the un-lost audio data of the audio frame corresponding to the second channel; and
the second packet loss concealing unit 806, configured to perform intra-channel packet loss concealment processing on the lost audio data of the audio frame corresponding to the first channel according to a preset packet loss concealment algorithm.

The correlation judging unit 804 in this embodiment may further include:
a value calculating module 8041, configured to use a correlation function to calculate a correlation value between audio data received on the first channel and
audio data which is received on the second channel and belongs to the same audio frame as the audio data received on the first channel; and
a judging module 8042, configured to determine, according to the correlation value obtained by calculation by the value calculating module, whether correlation exists between the first channel and the second channel.

Alternatively, the correlation judging unit 804 in this embodiment may further include:
an obtaining module 8043, configured to obtain a signal characteristic parameter of audio data received on the first channel and a signal characteristic parameter of audio data which is received on the second channel and belongs to the same audio frame as the audio data received on the first channel; and
a determining module 8044, configured to determine whether a difference between the signal characteristic parameter of the audio data received on the first channel and the signal characteristic parameter of the audio data which is received on the second channel and belongs to the same audio frame as the audio data received on the first channel is smaller than a preset value, and if so, determine that correlation exists between the first channel and the second channel; if not, determine that correlation does not exist between the first channel and the second channel.

The first packet loss concealing unit 805 in this embodiment may further include:
a calculating module 8051, configured to calculate a time compensation parameter corresponding to the lost audio data of the audio frame corresponding to the first channel according to an intra-channel packet loss concealment algorithm;
a correcting module 8052, configured to use the signal characteristic parameter of the un-lost audio data of the audio frame corresponding to the second channel to correct the time compensation parameter obtained by calculation by the calculating module 8051 to obtain an integrated compensation parameter; and
a recovering module 8053, configured to recover the lost audio data of the audio frame corresponding to the first channel according to the integrated compensation parameter obtained by correction by the correcting module 8052.

Alternatively, the first packet loss concealing unit 805 in this embodiment may be specifically configured to perform packet loss concealment processing on the lost audio data of the audio frame corresponding to the first channel according to the signal characteristic parameter of the un-lost audio data of the audio frame corresponding to the second channel and a signal characteristic parameter of un-lost audio data of the audio frame corresponding to at least one correlated channel.

The correlated channel is a channel having correlation with the first channel, other than the second channel in the N-M channels corresponding to the un-lost audio data.

For ease of understanding, the following describes in detail the contact between units of the audio decoding apparatus in this embodiment by using a specific application scenario.

In this embodiment, the receiving unit 801 may receive data packets from an audio encoding apparatus.

After the audio encoding apparatus completes encoding, data packets are sent to the audio decoding apparatus.

The sending process may be as follows: The audio encoding apparatus directly sends the data packets to the audio decoding apparatus, or the audio encoding apparatus sends the data packets to a forwarding device, and then the forwarding device sends the data packets to the audio decoding apparatus.

Because UDP provides a simple and unreliable transaction-oriented information transfer service, packet loss is unavoidable in the process of transmitting audio and image data. When data packet loss occurs, the audio decoding apparatus may determine audio data loss of each channel.

If the audio decoding apparatus learns that not all N channels have lost audio data in the same audio frame but only the audio data of M channels is lost in the same audio frame, and audio data of other channels than the M channels in the N channels, which belongs to the same audio frame as the lost audio data in the audio frame, is not lost, the decoding unit 802 may decode the un-lost audio data of the audio frame.

After the decoding unit 802 decodes the un-lost audio data of the audio frame corresponding to the N-M channels, the extracting unit 803 may obtain the signal characteristic parameter of the audio data.

In this embodiment, the specific signal characteristic parameter may be a signal pitch period and/or signal energy. It is understandable that in the actual application, the signal characteristic parameter may be indicated by other parameters in addition to the above two parameters, for example, a signal pitch, which is not specifically limited herein.

In this embodiment, the correlation judging unit 804 may determine whether correlation exists between a first channel and a second channel, where the first channel is any one of the M channels with lost audio data of the audio frame, and the second channel is any one of the N-M channels without audio data loss in the audio frame.

The specific determining manner of the correlation judging unit 804 is similar to the content described in step 404 in the embodiment shown in FIG. 4, and is not further described herein.

If the correlation judging unit 804 determines that correlation exists between the first channel and the second channel, the calculating module 8051 in the first packet loss concealing unit 805 may first calculate a time compensation parameter corresponding to the lost audio data of the audio frame corresponding to the first channel according to an intra-channel packet loss concealment algorithm.

After the calculating module 8051 obtains the time compensation parameter by calculation, the correcting module 8052 may use the signal characteristic parameter of the un-lost audio data of the audio frame corresponding to the second channel to correct the time compensation parameter to obtain an integrated compensation parameter.

After the correcting module 8052 obtains the integrated compensation parameter by calculation, the recovering module 8053 may recover the lost audio data of the audio frame corresponding to the first channel according to the integrated compensation parameter.

It should be noted that the above describes a process for the first packet loss concealing unit 805 to use the signal characteristic parameter of the un-lost audio data of the audio frame corresponding to the second channel to perform packet loss concealment processing on the lost audio data of the audio frame corresponding to the first channel. In the actual application, if correlation also exists between other channels and the first channel in addition to correlation between the second channel and the first channel, the first packet loss concealing unit 805 may also perform packet loss concealment processing on the lost audio data of the audio frame corresponding to the first channel according to the signal characteristic parameters of the un-lost audio data of the audio frame corresponding to multiple channels having correlation with the first channel. The specific process is similar to the content described in step 405 to step 407 in the embodiment shown in FIG. 4, and is not further described herein. If the correlation judging unit 804 determines that correlation does not exist between the first channel and the second channel, the second packet loss concealing unit 806 may use a preset packet loss concealment algorithm to perform intra-channel packet loss concealment processing on the lost audio data of the audio frame corresponding to the first channel. The specific process is similar to the conventional packet loss concealment process, and is not further described herein.

In the embodiment of the present invention, when data packet loss is detected and audio data of an audio frame corresponding to M channels (M is an integer greater than 0 and smaller than N) in N channels (N is an integer greater than or equal to 2) is lost, if audio data of other channels than the M channels in the N channels, which belongs to the same audio frame as the lost audio data in the audio frame, is not lost, a signal characteristic parameter of the un-lost audio data of the audio frame corresponding to the N-M channels may be obtained; and if correlation exists between the first channel and the second channel, packet loss concealment processing is performed on the lost audio data of the audio frame corresponding to the first channel according to the signal characteristic parameter of the un-lost audio data of the audio frame corresponding to the second channel. Because the un-lost audio data belongs to the same audio frame but belongs to different channels, correlation between different channels may be used when the audio decoding apparatus performs packet loss concealment processing, so as to improve the effect of packet loss concealment processing in a system having N channels.

Persons of ordinary skill in the art may understand that all or a part of the steps of the methods in the embodiments may be implemented by a program instructing relevant hardware. The program may be stored in a computer readable storage medium, such as a read-only memory, a magnetic disk, or an optical disk.

What is described in detail above is an audio decoding method and apparatus provided by the present invention. With respect to the implementation and application scope of the present invention, variations may be made by persons of ordinary skill in the art according to the idea of the embodiments of the present invention. The scope of protection is limited only by the appended claims.

## Claims

1. An audio decoding method, applicable to an audio decoding system comprising N channels, wherein N is an integer greater than or equal to 2, wherein the method comprises:
receiving data packets;
when data packet loss is detected and audio data of an audio frame corresponding to M channels in N channels is lost, if audio data of other channels than the M channels in the N channels, which belongs to the same audio frame as the lost audio data in the audio frame, is not lost, decoding the un-lost audio data of the audio frame corresponding to the N-M channels, wherein M is an integer greater than 0 and smaller than N;
extracting a signal characteristic parameter of the un-lost audio data of the audio frame corresponding to the N-M channels which is obtained after decoding;
determining whether correlation exists between a first channel and a second channel, wherein the first channel is any one of the M channels with lost audio data of the audio frame, and the second channel is any one of the N-M channels without audio data loss in the audio frame; and
if correlation exists between the first channel and the second channel, performing packet loss concealment processing on lost audio data of the audio frame corresponding to the first channel according to a signal characteristic parameter of un-lost audio data of the audio frame corresponding to the second channel;
if correlation does not exist between the first channel and the second channel, performing intra-channel packet loss concealment processing on the lost audio data of the audio frame corresponding to the first channel according to a preset packet loss concealment algorithm.

2. The method according to claim 1, wherein the determining whether correlation exists between a first channel and a second channel comprises:
using a correlation function to calculate a correlation value between audio data received on the first channel and audio data which is received on the second channel and belongs to the same audio frame as the audio data received on the first channel; and
determining, according to the correlation value, whether correlation exists between the first channel and the second channel.

3. The method according to claim 1, wherein the determining whether correlation exists between a first channel and a second channel comprises:
obtaining a signal characteristic parameter of audio data received on the first channel and a signal characteristic parameter of audio data which is received on the second channel and belongs to the same audio frame as the audio data received on the first channel; and
determining whether a difference between the signal characteristic parameter of the audio data received on the first channel and the signal characteristic parameter of the audio data which is received on the second channel and belongs to the same audio frame as the audio data received on the first channel is smaller than a preset value, and if so, determining that correlation exists between the first channel and the second channel, if not, determining that correlation does not exist between the first channel and the second channel.

4. The method according to any one of claims 1 to 3, wherein the performing packet loss concealment processing on the lost audio data of the audio frame corresponding to the first channel according to the signal characteristic parameter of the un-lost audio data of the audio frame corresponding to the second channel comprises:
calculating a time compensation parameter corresponding to the lost audio data of the audio frame corresponding to the first channel according to an intra-channel packet loss concealment algorithm;
using the signal characteristic parameter of the un-lost audio data of the audio frame corresponding to the second channel to correct the time compensation parameter to obtain an integrated compensation parameter; and
recovering the lost audio data of the audio frame corresponding to the first channel according to the integrated compensation parameter.

5. The method according to claim 4, wherein the using the signal characteristic parameter of the un-lost audio data of the audio frame corresponding to the second channel to correct the time compensation parameter to obtain an integrated compensation parameter comprises:
performing a weighting operation on the signal characteristic parameter of the un-lost audio data of the audio frame corresponding to the second channel and the time compensation parameter according to a preset weighting algorithm to obtain the integrated compensation parameter.

6. The method according to any one of claims 1 to 3, wherein the performing packet loss concealment processing on the lost audio data of the audio frame corresponding to the first channel according to the signal characteristic parameter of the un-lost audio data of the audio frame corresponding to the second channel comprises:
performing packet loss concealment processing on the lost audio data of the audio frame corresponding to the first channel according to the signal characteristic parameter of the un-lost audio data of the audio frame corresponding to the second channel and a signal characteristic parameter of un-lost audio data of the audio frame corresponding to at least one correlated channel;
wherein the correlated channel is a channel having correlation with the first channel, other than the second channel in the N-M channels corresponding to the un-lost audio data.

7. The method according to claim 6, wherein the performing packet loss concealment processing on the lost audio data of the audio frame corresponding to the first channel according to the signal characteristic parameter of the un-lost audio data of the audio frame corresponding to the second channel and a signal characteristic parameter of un-lost audio data of the audio frame corresponding to at least one correlated channel comprises:
calculating a time compensation parameter corresponding to the lost audio data of the audio frame corresponding to the first channel according to an intra-channel packet loss concealment algorithm;
using the signal characteristic parameter of the un-lost audio data of the audio frame corresponding to the second channel and the signal characteristic parameter of the un-lost audio data of the audio frame corresponding to the at least one correlated channel to correct the time compensation parameter to obtain an integrated compensation parameter; and
recovering the lost audio data of the audio frame corresponding to the first channel according to the integrated compensation parameter.

8. The method according to any one of claims 1 to 7, wherein:
the signal characteristic parameter comprises: signal pitch period and/or signal energy.

9. The method according to any one of claims 1 to 7, wherein:
when detecting data packet loss and determining that all audio data of the N channels in the same audio frame is lost, performing intra-channel packet loss concealment processing on the lost audio data of the N channels according to the preset packet loss concealment algorithm.

10. An audio decoding apparatus for decoding audio data of N channels, wherein N is an integer greater than or equal to 2, wherein the apparatus comprises:
a receiving unit, configured to receive data packets;
a decoding unit, configured to: when data packet loss is detected and audio data of an audio frame corresponding to M channels in N channels is lost, if audio data of other channels than the M channels in the N channels, which belongs to the same audio frame as the lost audio data in the audio frame, is not lost, decode the un-lost audio data of the audio frame corresponding to the N-M channels, wherein M is an integer greater than 0 and smaller than N;
an extracting unit, configured to extract a signal characteristic parameter of the un-lost audio data of the audio frame corresponding to the N-M channels which is obtained by the decoding unit after decoding;
a correlation judging unit, configured to determine whether correlation exists between a first channel and a second channel, wherein the first channel is any one of the M channels with lost audio data of the audio frame, and the second channel is any one of the N-M channels without audio data loss in the audio frame, and if correlation exists between the first channel and the second channel, trigger a first packet loss concealing unit to perform a corresponding operation; if correlation does not exist between the first channel and the second channel, trigger a second packet loss concealing unit to perform a corresponding operation;
the first packet loss concealing unit, configured to perform packet loss concealment processing on lost audio data of the audio frame corresponding to the first channel according to a signal characteristic parameter of un-lost audio data of the audio frame corresponding to the second channel which is extracted by the extracting unit; and
the second packet loss concealing unit, configured to perform intra-channel packet loss concealment processing on the lost audio data of the audio frame corresponding to the first channel according to a preset packet loss concealment algorithm.

11. The audio decoding apparatus according to claim 10, wherein the correlation judging unit comprises:
a value calculating module, configured to use a correlation function to calculate a correlation value between audio data received on the first channel and audio data which is received on the second channel and belongs to the same audio frame as the audio data received on the first channel; and
a judging module, configured to determine, according to the correlation value obtained by calculation by the value calculating module, whether correlation exists between the first channel and the second channel.

12. The audio decoding apparatus according to claim 10, wherein the correlation judging unit comprises:
an obtaining module, configured to obtain a signal characteristic parameter of audio data received on the first channel and a signal characteristic parameter of audio data which is received on the second channel and belongs to the same audio frame as the audio data received on the first channel; and
a determining module, configured to determine whether a difference between the signal characteristic parameter of the audio data received on the first channel and the signal characteristic parameter of the audio data which is received on the second channel and belongs to the same audio frame as the audio data received on the first channel is smaller than a preset value, and if so, determine that correlation exists between the first channel and the second channel; if not, determine that correlation does not exist between the first channel and the second channel.

13. The audio decoding apparatus according to any one of claims 10 to 12, wherein the first packet loss concealing unit comprises:
a calculating module, configured to calculate a time compensation parameter corresponding to the lost audio data of the audio frame corresponding to the first channel according to an intra-channel packet loss concealment algorithm;
a correcting module, configured to use the signal characteristic parameter of the un-lost audio data of the audio frame corresponding to the second channel to correct the time compensation parameter obtained by calculation by the calculating module to obtain an integrated compensation parameter; and
a recovering module, configured to recover the lost audio data of the audio frame corresponding to the first channel according to the integrated compensation parameter obtained by correction by the correcting module.

14. The audio decoding apparatus according to any one of claims 10 to 12, wherein:
packet loss concealment processing is performed on the lost audio data of the audio frame corresponding to the first channel according to the signal characteristic parameter of the un-lost audio data of the audio frame corresponding to the second channel and a signal characteristic parameter of un-lost audio data of the audio frame corresponding to at least one correlated channel;
wherein the correlated channel is a channel having correlation with the first channel, other than the second channel in the N-M channels corresponding to the un-lost audio data.

## Patentansprüche

1. Audiodekodierungsverfahren, das auf ein Audiodekodierungssystem anwendbar ist, das N Kanäle aufweist, wobei N eine ganze Zahl ist, die größer oder gleich 2 ist, wobei das Verfahren die folgenden Schritte aufweist:
Empfangen von Datenpaketen;
wenn ein Datenpaketverlust ermittelt wird und Audiodaten eines Audiorahmens, die M Kanälen in N Kanälen entsprechen, verlorengegangen sind, wenn Audiodaten anderer Kanäle als den M Kanälen in den N Kanälen, die zu demselben Audiorahmen gehören wie die verlorengegangenen Audiodaten in dem Audiorahmen, nicht verlorengegangen sind, Decodieren der nicht verlorengegangenen Audiodaten des Audiorahmens, die den N-M Kanälen entsprechen, wobei M eine ganze Zahl ist, die größer als 0 und kleiner als N ist;
Extrahieren eines Signaleigenschaftsparameters der nicht verlorengegangenen Audiodaten des Audiorahmens, die den N-M Kanälen entsprechen, der nach dem Decodieren beschafft wird;
Feststellen, ob eine Korrelation zwischen einem ersten Kanal und einem zweiten Kanal vorhanden ist, wobei der erste Kanal irgendeiner der M Kanäle mit verlorengegangenen Audiodaten des Audiorahmens ist, und der zweite Kanal irgendeiner der N-M Kanäle ohne einen Audiodatenverlust in dem Audiorahmen ist; und
wenn eine Korrelation zwischen dem ersten Kanal und dem zweiten Kanal vorhanden ist, Durchrühren einer Verarbeitung zur Paketverlustverdeckung an verlorengegangenen Audiodaten des Audiorahmens, die dem ersten Kanal entsprechen, gemäß einem Signaleigenschaftsparameter nicht verlorengegangener Audiodaten des Audiorahmens, die dem zweiten Kanal entsprechen;
wenn keine Korrelation zwischen dem ersten Kanal und dem zweiten Kanal vorhanden ist, Durchführen einer kanalinternen Verarbeitung zur Paketverlustverdeckung an den verlorengegangenen Audiodaten des Audiorahmens, die dem ersten Kanal entsprechen, gemäß einem voreingestellten Algorithmus zur Paketverlustverdeckung.

2. Verfahren nach Anspruch 1, wobei das Feststellen, ob eine Korrelation zwischen einem ersten Kanal und einem zweiten Kanal vorhanden ist, aufweist:
Verwenden einer Korrelationsfunktion, um einen Korrelationswert zwischen auf dem ersten Kanal empfangenen Audiodaten und Audiodaten zu berechnen, die auf dem zweiten Kanal empfangen werden und zum selben Audiorahmen gehören wie die auf dem ersten Kanal empfangenen Audiodaten; und
Feststellen gemäß dem Korrelationswert, ob eine Korrelation zwischen dem ersten Kanal und dem zweiten Kanal vorhanden ist.

3. Verfahren nach Anspruch 1, wobei das Feststellen, ob eine Korrelation zwischen einem ersten Kanal und einem zweiten Kanal vorhanden ist, aufweist:
Beschaffen eines Signaleigenschaftsparameters von auf dem ersten Kanal empfangenen Audiodaten und eines Signaleigenschaftsparameters von Audiodaten, die auf dem zweiten Kanal empfangen werden und zum selben Audiorahmen gehören wie die auf dem ersten Kanal empfangenen Audiodaten; und
Feststellen, ob eine Differenz zwischen dem Signaleigenschaftsparameter der auf dem ersten Kanal empfangenen Audiodaten und dem Signaleigenschaftsparameter der Audiodaten, die auf dem zweiten Kanal empfangen werden und zum selben Audiorahmen gehören wie die auf dem ersten Kanal empfangenen Audiodaten, kleiner als ein voreingestellter Wert ist, und wenn dem so ist, Feststellen, dass eine Korrelation zwischen dem ersten Kanal und dem zweiten Kanal vorhanden ist, wenn dem nicht so ist, Feststellen, dass keine Korrelation zwischen dem ersten Kanal und dem zweiten Kanal vorhanden ist.

4. Verfahren nach einem der Ansprüche 1 bis 3, wobei das Durchführen einer Verarbeitung zur Paketverlustverdeckung an den verlorengegangenen Audiodaten des Audiorahmens, die dem ersten Kanal entsprechen, gemäß dem Signaleigenschaftsparameter der nicht verlorengegangenen Audiodaten des Audiorahmens, die dem zweiten Kanal entsprechen, aufweist:
Berechnen eines Zeitausgleichsparameters, der den verlorengegangenen Audiodaten des Audiorahmens entspricht, die dem ersten Kanal entsprechen, gemäß einem kanalinternen Algorithmus zur Paketverlustverdeckung;
Verwenden des Signaleigenschaftsparameters der nicht verlorengegangenen Audiodaten des Audiorahmens, die dem zweiten Kanal entsprechen, um den Zeitausgleichsparameter zu korrigieren, um einen integrierten Ausgleichsparameter zu beschaffen; und
Zurückgewinnen der verlorengegangenen Audiodaten des Audiorahmens, die dem ersten Kanal entsprechen, gemäß dem integrierten Ausgleichsparameter.

5. Verfahren nach Anspruch 4, wobei das Verwenden des Signaleigenschaftsparameters der nicht verlorengegangenen Audiodaten des Audiorahmens, die dem zweiten Kanal entsprechen, um den Zeitausgleichsparameter zu korrigieren, um einen integrierten Ausgleichsparameter zu beschaffen, aufweist:
Durchführen einer Gewichtungsoperation am Signaleigenschaftsparameter der nicht verlorengegangenen Audiodaten des Audiorahmens, die dem zweiten Kanal entsprechen, und dem Zeitausgleichsparameter gemäß einem voreingestellten Gewichtungsalgorithmus, um den integrierten Ausgleichsparameter zu beschaffen.

6. Verfahren nach einem der Ansprüche 1 bis 3, wobei das Durchführen einer Verarbeitung zur Paketverlustverdeckung an den verlorengegangenen Audiodaten des Audiorahmens, die dem ersten Kanal entsprechen, gemäß dem Signaleigenschaftsparameter der nicht verlorengegangenen Audiodaten des Audiorahmens, die dem zweiten Kanal entsprechen, aufweist:
Durchführen einer Verarbeitung zur Paketverlustverdeckung an den verlorengegangenen Audiodaten des Audiorahmens, die dem ersten Kanal entsprechen, gemäß dem Signaleigenschaftsparameter der nicht verlorengegangenen Audiodaten des Audiorahmens, die dem zweiten Kanal entsprechen, und einem Signaleigenschaftsparameter nicht verlorengegangener Audiodaten des Audiorahmens, die mindestens einem korrelierten Kanal entsprechen;
wobei der korrelierte Kanal ein anderer Kanal ist, der eine Korrelation mit dem ersten Kanal aufweist, als der zweite Kanal in den N-M Kanälen, die den nicht verlorengegangenen Audiodaten entsprechen.

7. Verfahren nach Anspruch 6, wobei das Durchführen einer Verarbeitung zur Paketverlustverdeckung an den verlorengegangenen Audiodaten des Audiorahmens, die dem ersten Kanal entsprechen, gemäß dem Signaleigenschaftsparameter der nicht verlorengegangenen Audiodaten des Audiorahmens, die dem zweiten Kanal entsprechen, und einem Signaleigenschaftsparameter nicht verlorengegangener Audiodaten des Audiorahmens, die mindestens einem korrelierten Kanal entsprechen, aufweist:
Berechnen eines Zeitausgleichsparameters, der den verlorengegangenen Audiodaten des Audiorahmens entspricht, die dem ersten Kanal entsprechen, gemäß einem kanalinternen Algorithmus zur Paketverlustverdeckung;
Verwenden des Signaleigenschaftsparameters der nicht verlorengegangenen Audiodaten des Audiorahmens, die dem zweiten Kanal entsprechen, und des Signaleigenschaftsparameters der nicht verlorengegangenen Audiodaten des Audiorahmens, die dem mindestens einen korrelierten Kanal entsprechen, um den Zeitausgleichsparameter zu korrigieren, um einen integrierten Ausgleichsparameter zu beschaffen; und Zurückgewinnen der verlorengegangenen Audiodaten des Audiorahmens, die dem ersten Kanal entsprechen, gemäß dem integrierten Ausgleichsparameter.

8. Verfahren nach einem der Ansprüche 1 bis 7, wobei:
der Signaleigenschaftsparameter aufweist: eine Signalabstandsperiode und/oder eine Signalenergie.

9. Verfahren nach einem der Ansprüche 1 bis 7, wobei:
beim Ermitteln eines Datenpaketverlusts und Feststellen, dass alle Audiodaten der N Kanäle im selben Audiorahmen verlorengegangen sind, Durchführen einer kanalinternen Verarbeitung zur Paketverlustverdeckung an den verlorengegangenen Audiodaten der N Kanäle gemäß dem voreingestellten Algorithmus zur Paketverlustverdeckung.

10. Audiodekodierungsvorrichtung zum Decodieren von Audiodaten von N Kanälen, wobei N eine ganze Zahl ist, die größer oder gleich 2 ist, wobei die Vorrichtung Folgendes aufweist:
eine Empfangseinheit, die konfiguriert ist, Datenpakete zu empfangen;
eine Decodierungseinheit, die konfiguriert ist: wenn ein Datenpaketverlust ermittelt wird und Audiodaten eines Audiorahmens, die M Kanälen in N Kanälen entsprechen,
verlorengegangen sind, wenn Audiodaten anderer Kanäle als den M Kanälen in den N Kanälen, die zu demselben Audiorahmen gehören wie die verlorengegangenen Audiodaten in dem Audiorahmen, nicht verlorengegangen sind, die nicht verlorengegangenen Audiodaten des Audiorahmens zu decodieren, die den N-M Kanälen entsprechen, wobei M eine ganze Zahl ist, die größer als 0 und kleiner als N ist;
eine Extraktionseinheit, die konfiguriert ist, einen Signaleigenschaftsparameter der nicht verlorengegangenen Audiodaten des Audiorahmens zu extrahieren, die den N-M Kanälen entsprechen, der durch die Decodierungseinheit nach dem Decodieren beschafft wird;
eine Korrelationsbeurteilungseinheit, die konfiguriert ist festzustellen, ob eine Korrelation zwischen einem ersten Kanal und einem zweiten Kanal vorhanden ist, wobei der erste Kanal irgendeiner der M Kanäle mit verlorengegangenen Audiodaten des Audiorahmens ist, und der zweite Kanal irgendeiner der N-M Kanäle ohne einen Audiodatenverlust in dem Audiorahmen ist, und wenn eine Korrelation zwischen dem ersten Kanal und dem zweiten Kanal vorhanden ist, eine erste Einheit zur Paketverlustverdeckung zu veranlassen, eine entsprechende Operation auszuführen; wenn keine Korrelation zwischen dem ersten Kanal und dem zweiten Kanal vorhanden ist, eine zweite Einheit zur Paketverlustverdeckung zu veranlassen, eine entsprechende Operation auszuführen;
die erste Einheit zur Paketverlustverdeckung, die konfiguriert ist, eine Verarbeitung zur Paketverlustverdeckung an verlorengegangenen Audiodaten des Audiorahmens,
die dem ersten Kanal entsprechen, gemäß einem Signaleigenschaftsparameter nicht verlorengegangener Audiodaten des Audiorahmens durchzuführen, die dem zweiten Kanal entsprechen, der durch die Extraktionseinheit extrahiert wird; und
die zweite Einheit zur Paketverlustverdeckung, die konfiguriert ist, eine kanalinterne Verarbeitung zur Paketverlustverdeckung an den verlorengegangenen Audiodaten des Audiorahmens, die dem ersten Kanal entsprechen, gemäß einem voreingestellten Algorithmus zur Paketverlustverdeckung durchzuführen.

11. Audiodekodierungsvorrichtung nach Anspruch 10, wobei die Korrelationsbeurteilungseinheit aufweist:
ein Wertberechnungsmodul, das konfiguriert ist, eine Korrelationsfunktion zu verwenden, um einen Korrelationswert zwischen auf dem ersten Kanal empfangenen Audiodaten und Audiodaten zu berechnen, die auf dem zweiten Kanal empfangen werden und zum selben Audiorahmen gehören wie die auf dem ersten Kanal empfangenen Audiodaten; und
ein Beurteilungsmodul, die konfiguriert ist, gemäß dem Korrelationswert, der durch eine Berechnung durch das Wertberechnungsmodul beschafft wird, festzustellen, ob eine Korrelation zwischen dem ersten Kanal und dem zweiten Kanal vorhanden ist.

12. Audiodekodierungsvorrichtung nach Anspruch 10, wobei die Korrelationsbeurteilungseinheit aufweist:
ein Beschaffungsmodul, das konfiguriert ist, einen Signaleigenschaftsparameter von auf dem ersten Kanal empfangenen Audiodaten und einen Signaleigenschaftsparameter von Audiodaten zu beschaffen, die auf dem zweiten Kanal empfangen werden und zum selben Audiorahmen gehören wie die auf dem ersten Kanal empfangenen Audiodaten; und
ein Feststellungsmodul, das konfiguriert ist festzustellen, ob eine Differenz zwischen dem Signaleigenschaftsparameter der auf dem ersten Kanal empfangenen Audiodaten und dem Signaleigenschaftsparameter der Audiodaten, die auf dem zweiten Kanal empfangen werden und zum selben Audiorahmen gehören wie die auf dem ersten Kanal empfangenen Audiodaten, kleiner als ein voreingestellter Wert ist, und wenn dem so ist, festzustellen, dass eine Korrelation zwischen dem ersten Kanal und dem zweiten Kanal vorhanden ist; wenn dem nicht so ist, festzustellen, dass keine Korrelation zwischen dem ersten Kanal und dem zweiten Kanal vorhanden ist.

13. Audiodekodierungsvorrichtung nach einem der Ansprüche 10 bis 12, wobei die erste Einheit zur Paketverlustverdeckung aufweist:
ein Berechnungsmodul, das konfiguriert ist, einen Zeitausgleichsparameter, der den verlorengegangenen Audiodaten des Audiorahmens entspricht, die dem ersten Kanal entsprechen, gemäß einem kanalinternen Algorithmus zur Paketverlustverdeckung zu berechnen;
ein Korrekturmodul, das konfiguriert ist, den Signaleigenschaftsparameter der nicht verlorengegangenen Audiodaten des Audiorahmens, die dem zweiten Kanal entsprechen, zu verwenden, um den Zeitausgleichsparameter zu korrigieren, der durch Berechnung durch das Berechnungsmodul beschafft wird, um einen integrierten Ausgleichsparameter zu beschaffen; und
ein Zurückgewinnungsmodul, das konfiguriert ist, die verlorengegangenen Audiodaten des Audiorahmens, die dem ersten Kanal entsprechen, gemäß dem integrierten Ausgleichsparameter zurückzugewinnen, der durch eine Korrektur durch das Korrekturmodul beschafft wird.

14. Audiodekodierungsvorrichtung nach einem der Ansprüche 10 bis 12, wobei:
eine Verarbeitung zur Paketverlustverdeckung an den verlorengegangenen Audiodaten des Audiorahmens durchgeführt wird, die dem ersten Kanal entsprechen, gemäß dem Signaleigenschaftsparameter der nicht verlorengegangenen Audiodaten des Audiorahmens, die dem zweiten Kanal entsprechen, und einem Signaleigenschaftsparameter nicht verlorengegangener Audiodaten des Audiorahmens, die mindestens einem korrelierten Kanal entsprechen;
wobei der korrelierte Kanal ein anderer Kanal ist, der eine Korrelation mit dem ersten Kanal aufweist, als der zweite Kanal in den N-M Kanälen, die den nicht verlorengegangenen Audiodaten entsprechen.

## Revendications

1. Procédé de décodage audio, pouvant s'appliquer à un système de décodage audio comprenant N canaux, N étant un entier supérieur ou égal à 2, le procédé comprenant :
la réception de paquets de données ;
lorsqu'une perte de paquets de données est détectée et lorsque des données audio d'une trame audio correspondant à M canaux parmi N canaux sont perdues, si les données audio d'autres canaux que les M canaux parmi les N canaux, qui appartiennent à la même trame audio que les données audio perdues dans la trame audio, ne sont pas perdues, le décodage des données audio non perdues de la trame audio correspondant aux N-M canaux, M étant un entier supérieur à 0 et inférieur àN;
l'extraction d'un paramètre caractéristique de signal des données audio non perdues de la trame audio correspondant aux N-M canaux qui est obtenue après décodage ;
la détermination du fait de savoir s'il existe une corrélation entre un premier canal et
un second canal, le premier canal étant l'un quelconque des M canaux ayant des données audio perdues de la trame audio, et le second canal étant l'un quelconque des N-M canaux sans perte de données audio dans la trame audio ; et
s'il existe une corrélation entre le premier canal et le second canal, l'exécution d'un traitement de masquage de perte de paquets sur les données audio perdues de la trame audio correspondant au premier canal conformément à un paramètre caractéristique de signal de données audio non perdues de la trame audio correspondant au second canal ;
s'il n'existe pas de corrélation entre le premier canal et le second canal, l'exécution d'un traitement de masquage de perte de paquets intra-canal sur les données audio perdues de la trame audio correspondant au premier canal conformément à un algorithme de masquage de perte de paquets prédéfini.

2. Procédé selon la revendication 1, dans lequel la détermination du fait de savoir s'il existe une corrélation entre un premier canal et un second canal comprend :
l'utilisation d'une fonction de corrélation pour calculer une valeur de corrélation entre des données audio reçues sur le premier canal et des données audio qui sont reçues sur le second canal et appartiennent à la même trame audio que les données audio reçues sur le premier canal ; et
la détermination, conformément à la valeur de corrélation, du fait de savoir s'il existe une corrélation entre le premier canal et le second canal.

3. Procédé selon la revendication 1, dans lequel la détermination du fait de savoir s'il existe une corrélation entre un premier canal et un second canal comprend :
l'obtention d'un paramètre caractéristique de signal de données audio reçues sur le premier canal et d'un paramètre caractéristique de signal de données audio qui sont reçues sur le second canal et appartiennent à la même trame audio que les données audio reçues sur le premier canal ; et
la détermination du fait de savoir si une différence entre le paramètre caractéristique de signal des données audio reçues sur le premier canal et le paramètre caractéristique de signal des données audio qui sont reçues sur le second canal et
appartiennent à la même trame audio que les données audio reçues sur le premier canal est inférieure à une valeur prédéfinie et si oui, la détermination du fait qu'il existe une corrélation entre le premier canal et le second canal et si non, la détermination du fait qu'il n'existe pas de corrélation entre le premier canal et le second canal.

4. Procédé selon l'une quelconque des revendications 1 à 3, dans lequel l'exécution d'un traitement de masquage de perte de paquets sur les données audio perdues de la trame audio correspondant au premier canal conformément au paramètre caractéristique de signal des données audio non perdues de la trame audio correspondant au second canal comprend :
le calcul d'un paramètre de compensation temporelle correspondant aux données audio perdues de la trame audio correspondant au premier canal conformément à un algorithme de masquage de perte de paquets intra-canal ;
l'utilisation du paramètre caractéristique de signal des données audio non perdues de la trame audio correspondant au second canal pour corriger le paramètre de compensation temporelle afin d'obtenir un paramètre de compensation intégré ; et
la récupération des données audio perdues de la trame audio correspondant au premier canal conformément au paramètre de compensation intégré.

5. Procédé selon la revendication 4, dans lequel l'utilisation du paramètre caractéristique de signal des données audio non perdues de la trame audio correspondant au second canal pour corriger le paramètre de compensation temporelle afin d'obtenir un paramètre de compensation intégré comprend :
l'exécution d'une opération de pondération sur le paramètre caractéristique de signal des données audio non perdues de la trame audio correspondant au second canal et
sur le paramètre de compensation temporelle conformément à un algorithme de pondération prédéfini afin d'obtenir le paramètre de compensation intégré.

6. Procédé selon l'une quelconque des revendications 1 à 3, dans lequel l'exécution d'un traitement de masquage de perte de paquets sur les données audio perdues de la trame audio correspondant au premier canal conformément au paramètre caractéristique de signal des données audio non perdues de la trame audio correspondant au second canal comprend :
l'exécution d'un traitement de masquage de perte de paquets sur les données audio perdues de la trame audio correspondant au premier canal conformément au paramètre caractéristique de signal des données audio non perdues de la trame audio correspondant au second canal et à un paramètre caractéristique de signal de données audio non perdues de la trame audio correspondant à au moins un canal corrélé ;
dans lequel le canal corrélé est un canal présentant une corrélation avec le premier canal, autre que le second canal parmi les N-M canaux correspondant aux données audio non perdues.

7. Procédé selon la revendication 6, dans lequel l'exécution d'un traitement de masquage de perte de paquets sur les données audio perdues de la trame audio correspondant au premier canal conformément au paramètre caractéristique de signal des données audio non perdues de la trame audio correspondant au second canal et au paramètre caractéristique de signal de données audio non perdues de la trame audio correspondant à au moins un canal corrélé comprend :
le calcul d'un paramètre de compensation temporelle correspondant aux données audio perdues de la trame audio correspondant au premier canal conformément à un algorithme de masquage de perte de paquets intra-canal ;
l'utilisation du paramètre caractéristique de signal des données audio non perdues de la trame audio correspondant au second canal et du paramètre caractéristique de signal des données audio non perdues de la trame audio correspondant à l'au moins un canal corrélé pour corriger le paramètre de compensation temporelle afin d'obtenir un paramètre de compensation intégré ; et
la récupération des données audio perdues de la trame audio correspondant au premier canal conformément au paramètre de compensation intégré.

8. Procédé selon l'une quelconque des revendications 1 à 7, dans lequel :
le paramètre caractéristique de signal comprend : une période de hauteur de son du signal et/ou une énergie du signal.

9. Procédé selon l'une quelconque des revendications 1 à 7, dans lequel :
lors de la détection d'une perte de paquets sur les données et de la détermination du fait que la totalité des données audio des N canaux de la même trame audio est perdue, l'exécution d'un traitement de masquage de perte de paquets intra-canal sur les données audio perdues des N canaux conformément à l'algorithme de masquage de perte de paquets prédéfini.

10. Appareil de décodage audio destiné à décoder des données audio de N canaux, N étant un entier supérieur ou égal à 2, dans lequel l'appareil comprend :
une unité de réception, configurée pour recevoir des paquets de données ;
une unité de décodage, configurée pour : lorsqu'une perte de paquets de données est détectée et lorsque des données audio d'une trame audio correspondant à M canaux parmi N canaux sont perdues, si les données audio d'autres canaux que les M canaux parmi les N canaux, qui appartiennent à la même trame audio que les données audio perdues dans la trame audio, ne sont pas perdues, décoder les données audio non perdues de la trame audio correspondant aux N-M canaux, M étant un entier supérieur à 0 et inférieur à N ;
une unité d'extraction, configurée pour extraire un paramètre caractéristique de signal des données audio non perdues de la trame audio correspondant aux N-M canaux qui est obtenue par l'unité de décodage après décodage ;
une unité de jugement de corrélation, configurée pour déterminer s'il existe une corrélation entre un premier canal et un second canal, le premier canal étant l'un quelconque des M canaux ayant des données audio perdues de la trame audio, et le second canal étant l'un quelconque des N-M canaux sans perte de données audio dans la trame audio, et s'il existe une corrélation entre le premier canal et le second canal,
déclencher une première unité de masquage de perte de paquets pour effectuer une opération correspondante ; s'il n'existe pas de corrélation entre le premier canal et le second canal, déclencher une seconde unité de masquage de perte de paquets pour effectuer une opération correspondante ;
la première unité de masquage de perte de paquets, configurée pour effectuer un traitement de masquage de perte de paquets sur des données audio perdues de la trame audio correspondant au premier canal conformément à un paramètre caractéristique de signal de données audio non perdues de la trame audio correspondant au second canal, qui est extrait par l'unité d'extraction ; et
la seconde unité de masquage de perte de paquets, configurée pour effectuer un traitement de masquage de perte de paquets intra-canal sur les données audio perdues de la trame audio correspondant au premier canal conformément à un algorithme de masquage de perte de paquets prédéfini.

11. Appareil de décodage audio selon la revendication 10, dans lequel l'unité de jugement de corrélation comprend :
un module de calcul de valeur, configuré pour utiliser une fonction de corrélation pour calculer une valeur de corrélation entre des données audio reçues sur le premier canal et des données audio qui sont reçues sur le second canal et appartiennent à la même trame audio que les données audio reçues sur le premier canal ; et
un module de jugement, configuré pour déterminer, conformément à la valeur de corrélation obtenue par le calcul effectué par le module de calcul de valeur, s'il existe une corrélation entre le premier canal et le second canal.

12. Appareil de décodage audio selon la revendication 10, dans lequel l'unité de jugement de corrélation comprend :
un module d'obtention, configuré pour obtenir un paramètre caractéristique de signal de données audio reçues sur le premier canal et un paramètre caractéristique de signal de données audio qui sont reçues sur le second canal et appartiennent à la même trame audio que les données audio reçues sur le premier canal ; et
un module de détermination, configuré pour déterminer si une différence entre le premier paramètre caractéristique de signal des données audio reçues sur le premier canal et le paramètre caractéristique de signal des données audio qui sont reçues sur le second canal et appartiennent à la même trame audio que les données audio reçues sur le premier canal est inférieure à une valeur prédéfinie et si oui, déterminer qu'il existe une corrélation entre le premier canal et le second canal et si non, déterminer qu'il n'existe pas de corrélation entre le premier canal et le second canal.

13. Appareil de décodage audio selon l'une quelconque des revendications 10 à 12, dans lequel la première unité de masquage de perte de paquets comprend :
un module de calcul, configuré pour calculer un paramètre de compensation temporelle correspondant aux données audio perdues de la trame audio correspondant au premier canal conformément à un algorithme de masquage de perte de paquets intra-canal ;
un module de correction, configuré pour utiliser le paramètre caractéristique de signal des données audio non perdues de la trame audio correspondant au second canal pour corriger le paramètre de compensation temporelle obtenu par le calcul effectué par le module de calcul afin d'obtenir un paramètre de compensation intégré ; et
un module de récupération, configuré pour récupérer les données audio perdues de la trame audio correspondant au premier canal conformément au paramètre de compensation intégré obtenu par la correction effectuée par le module de correction.

14. Appareil de décodage audio selon l'une quelconque des revendications 10 à 12, dans lequel :
un traitement de masquage de perte de paquets est effectué sur les données audio perdues de la trame audio correspondant au premier canal conformément au paramètre caractéristique de signal des données audio non perdues de la trame audio correspondant au second canal et à un paramètre caractéristique de signal de données audio non perdues de la trame audio correspondant à au moins un canal corrélé ;
dans lequel le canal corrélé est un canal présentant une corrélation avec le premier canal, autre que le second canal parmi les N-M canaux correspondant aux données audio non perdues.
